# EUROPÄISCHE PATENTANMELDUNG

(11) **EP 1 121 908 A1**
(43) Veröffentlichungstag der Anmeldung: **08.08.2001**
(21) Anmeldenummer: 00102496.7
(22) Anmeldetag: 05.02.2000
(51) Int. Cl.: A61C 13/09

(54) **Künstlicher Frontzahn**

(71) Anmelder: Geller, Willy, 8152 Opfikon (CH)
(72) Erfinder: Geller, Willy, 8152 Opfikon (CH)
(74) Vertreter: Ritscher, Thomas, Dr.

(57) **Zusammenfassung**

Die Erfindung betrifft einen künstlichen Frontzahn (2) zum Aufbau von dentalen Total- oder Teilprothesen, von zahnärztlichen Provisorien oder implantatgetragenem Zahnersatz, welcher künstliche Frontzahn einen Zahnkörper (13) und einen Zahnhals (14) aufweist, die absatzlos ineinander übergehen, und welcher künstliche Frontzahn eine Vestibularfläche (4) mit einer Länge L und einem mesial-distal verlaufenden Zahnäquator (10) aufweist, dadurch gekennzeichnet, dass der Zahnäquator mindestens ungefähr 25% bezogen auf die Länge L der Vestibularfläche vom zervikalen Rand der Vestibularfläche beabstandet ist.

## Beschreibung

Die Erfindung betrifft einen künstlichen Frontzahn zum Aufbau von dentalen Total- oder Teilprothesen, von zahnärztlichen Provisorien oder implantatgetragenem Zahnersatz gemäss Oberbegriff des Anspruchs 1 sowie eine dentale Prothese, insbesondere eine Teil-oder Totalprothese, ein zahnärztliches Provisorium oder einen implantatgetragenen Zahnersatz gemäss Anspruch 10.

Die Träger von dentalen Total- oder Teilprothesen bzw. zahnärztlichen Provisorien oder implantatgetragenem Zahnersatz legen im allgemeinen grossen Wert auf ein natürliches und ästhetisches Erscheinungsbild derselben. Dies führte zur Entwicklung einer Vielzahl von künstlichen Zähnen bzw. Zahnkollektionen, wobei insbesondere versucht wurde, die Vielfalt der natürlichen Zahnformen nachzubilden.

Die grosse Anzahl der auf dem Markt befindlichen derartigen künstlichen Zähne zum Aufbau von abnehmbarer oder festsitzender Prothetik führt allerdings nicht nur zu einer aufwendigen und kostenintensiven Vorratshaltung und Herstellung, sondern erschwert darüber hinaus wegen der Unübersichtlichkeit der unterschiedlichen Typen auch die Auswahl. In Kenntnis dieses Problems beschreibt die DE-197'14'282 eine Kollektion künstlicher Frontzähne, die in wesentlichen Grössenklassen drei Formgruppen umfasst, die sich durch die Verhältnisse der mesio-distalen Breiten ihrer Vestibularflächen in deren zervikalem, mittlerem und inzisalem Längendrittel unterscheiden, wobei eine zervikalbetonte Gruppe, eine mittenbetonte Gruppe und eine inzisalbetonte Gruppe angegeben wird.

In der Praxis erweisen sich allerdings derartige Kollektionen künstlicher Frontzähne als nicht ausreichend und ungeeignet, die patientenbedingt vorgegebenen unterschiedlichen anatomischen Verhältnisse in einfacher Weise zu berücksichtigen und eine natürliche Zahn- und Zahnfleischsituation zu imitieren sowie ein natürliches und ästhetisches Erscheinungsbild zu gewährleisten. Insbesondere erweist sich dabei die im allgemeinen kurze klinische Krone mit abgesetzter Zahnhalsstruktur als limitierender Faktor, so dass in der Regel eine Vielzahl von Grössenklassen zur Anpassung an die individuelle Situation nötig sind.

In der DE-196'44'931 werden künstliche Zähne zum Aufbau von zahnärtzlichen Total- oder Teilprothesen für den menschlichen Ober- und Unterkiefer beschrieben, die eine seitliche keilförmige Anformung als interdentale Verschlussleiste aufweisen und bei denen Zahnhals und Zahncorpus absatzlos ineinander übergehen.

Wenngleich durch das absatzlose ineinander Übergehen von Zahnhals und Zahncorpus insbesondere die Möglichkeit der Herausbildung von Strukturen, die beim gesunden natürlichen Zahn nicht vorhanden sind, wie bspw. freiliegende Zahnhälse, vermieden werden kann, so führen auch diese künstlichen Zähne zu erheblichen Problemen bei der Imitation natürlicher Zahn- und Zahnfleischsituationen. Darüber hinaus erweisen sich auch derartige künstliche Zähne als ungeeignet, eine Anpassung an patientenbedingt unterschiedliche anatomische Verhältnisse in einfacher Weise zu ermöglichen und ein natürliches und ästethisches Erscheinungsbild zu erzeugen.

So zeigt die Praxis, dass die interdentale Ausformung ein individualisiertes Aufstellen der Zähne mit Rotation um die Zahnachse behindert. Insbesondere führt ein der jeweiligen klinischen Situation angepasstes Aufstellen der Zähne mit hierfür in der Regel notwendiger Rotation zu einem unästethischen und einem nicht natürlichen Erscheinungsbild, da hierdurch der Interdentalraum durch Lückenbildung geöffnet und die Zahnbreite ungewollt verschmälert wird. Darüber hinaus wird im allgemeinen bei derartigen künstlichen Zähnen auf eine natürliche Ausformung der leistenbegrenzten Labialfläche bzw. Vestibularfläche mit konischovoider Verjüngung zugunsten einer Wölbung zum Interdentalraum, d.h. der seitlichen keilförmigen Anformung, verzichtet. Desweiteren zeigt die Praxis, dass zur Anpassung an die jeweilige individuelle klinische Situation auch bei derartigen künstlichen Zähnen in der Regel eine Vielzahl unterschiedlicher Grössen und Formen nötig sind.

Der Erfindung liegt daher die Aufgabe zugrunde, einen künstlichen Frontzahn zum Aufbau abnehmbarer oder festsitzender Prothetik zu schaffen, welcher die Nachteile und Einschränkungen der künstlichen Frontzähne nach dem Stand der Technik vermeidet.

Darüber hinaus ist es eine Aufgabe der vorliegenden Erfindung einen künstlichen Frontzahn anzugeben, der ein natürliches und ästhetisches Erscheinungsbild erzeugt, und welcher künstliche Frontzahn insbesondere eine leichte und in einfacher Weise ausführbare Anpassbarkeit an die jeweilige individuelle klinische Situation erlaubt und in einfacher Weise die Imitation natürlicher Zahn- und Zahnfleischsituationen ermöglicht.

Desweiteren ist es eine Aufgabe der vorliegenden Erfindung, künstliche Frontzähne zu schaffen, welche in ihrem anatomischen und ästhetischen Erscheinungsbild so modifizierbar sind, dass bei der Herstellung und Aufbau von Zahnprothetik bzw. Zahnersatz eine leichtere Anpassbarkeit an die gegebene klinische Situation ermöglicht und eine anatomische und ästhetische Verbesserung erzielt wird.

Diese Aufgaben werden erfindungsgemäss mit einem künstlichen Frontzahn zum Aufbau von dentalen Total- oder Teilprothesen, von zahnärztlichen Provisorien oder implantatgetragenem Zahnersatz mit den Merkmalen des Anspruchs 1, und einer dentalen Prothese, insbesondere einer dentalen Voll- oder Teilprothese, einem zahnärztlichen Provisorium oder einem implantatgetragenem Zahnersatz mit den Merkmalen des Anspruchs 10 gelöst.

Insbesondere werden diese Aufgaben durch einen künstlichen Frontzahn zum Aufbau von dentalen Total- oder Teilprothesen, von zahnärztlichen Provisorien oder implantatgetragenem Zahnersatz gelöst, welcher künstliche Frontzahn einen Zahnkörper und einen Zahnhals aufweist, die absatzlos ineinander übergehen, und welcher künstliche Frontzahn eine Vestibularfläche aufweist, welche Vestibularfläche eine Länge L und einen mesial-distal verlaufenden Zahnäquator aufweist, wobei der Zahnäquator mindestens ungefähr 25% bezogen auf die Länge L der Vestibularfläche vom zervikalen Rand der Vestibularfläche beabstandet ist.

In einer bevorzugten Ausführungsform des erfindungsgemässen künstlichen Frontzahns, ist der Zahnäquator mindestens ungefähr 33%, besonders bevorzugt mindestens ungefähr 40%, bezogen auf die Länge L der Vestibularfläche vom zervikalen Rand der Vestibularfläche beabstandet.

In einer weiteren besonders bevorzugten Ausführungsform der vorliegenden Erfindung ist der Zahnäquator mindestens ungefähr 50%, vorzugsweise mindestens ungefähr 60%, bezogen auf die Länge L der Vestibularfläche vom zervikalen Rand der Vestibularfläche beabstandet. Eine derartige Ausführungsform weist dabei insbesondere einen sehr langen Zahnhals bzw. einen sogenannten "Wurzelfortsatz" auf. Ein sehr langer Zahnhals, im folgenden auch "überlanger" Zahnhals genannt, erweist sich insbesondere bei der Herstellung von Implantaten als besonders vorteilhaft, da hierfür in der Regel ein erheblicher Knochenverlust kompensiert werden muss. Die künstlichen Frontzähne gemäss dem Stand der Technik sind dafür in der Regel zu kurz bzw. weisen insbesondere einen zu kurzen Zahnhals auf und/oder verfügen über keinen derartigen Wurzelfortsatz, um sowohl ein qualitativ zufriedenstellendes, als auch ein an die gegebene klinische Situation leicht anpassbares und anatomisch wie ästhetisch ansprechendes Implantat zu ergeben.

Unter Frontzähne werden hierin sowohl Schneidezähne als auch Eckzähne verstanden. Unter dem Ausdruck "Zahnäquator" soll in der vorliegenden Erfindung die mesial-distal verlaufende Linie auf der Vestibularfläche des künstlichen Frontzahns verstanden werden, welche Linie die Punkte auf der Vestibularfläche des künstlichen Frontzahns miteinander verbindet, welche Punkte - bei seitlicher Ansicht des künstlichen Frontzahns mit vertikaler Ausrichtung der Zahnachse des künstlichen Frontzahns und unter Rotation des künstlichen Frontzahns um diese Zahnachse - den grössten Abstand zur Zahnachse aufweisen. Der erwähnte Abstand ermittelt sich hierbei durch die Länge der entsprechenden Senkrechten zu der Zahnachse. In diesem Zusammenhang und für die vorliegende Erfindung soll unter "Zahnachse" diejenige in einer Saggital-Ebene des künstlichen Frontzahns verlaufende Achse verstanden werden, die durch die zwei Punkte definiert ist, welche zwei Punkte den inzisalen Rand und den zervikalen Rand der Vestibularfläche des künstlichen Frontzahns markieren und dabei ein maximaler Abstand zwischen einem solchen inzisalen Randpunkt und einem solchen zervikalen Randpunkt der Vestibularfläche des künstlichen Frontzahns resultiert. Im allgemeinen handelt es sich bei der obigen Saggital-Ebene um die Median-Sagittal-Ebene des künstlichen Frontzahns, d.h. diejenige Saggitale, die den erfindungsgemässen künstlichen Frontzahn ungefähr symmetrisch in eine linke und eine rechte Hälfte teilt.

Als "Länge L der Vestibularfläche" soll in der vorliegenden Erfindung diejenige Länge verstanden werden, die dem Abstand zwischen, denen auf der Zahnachse gemäss obiger Definition liegenden, inzisalem Randpunkt und zervikalem Randpunkt der Vestibularfläche des künstlichen Frontzahns entspricht. Diese Länge L der Vestibularfläche wird somit gemäss der vorliegenden Erfindung nicht entlang der in der Regel gekrümmten Vestibularfläche gemessen. Gemäss der vorliegenden Erfindung soll eine Beabstandung des Zahnäquators vom zervikalen Rand der Vestibularfläche von mindestens 25% bezogen auf die Länge L der Vestibularfläche bedeuten, dass der Zahnäquator inzisalwärts bezogen auf eine Linie auf der Vestibularfläche des künstlichen Frontzahns verläuft, welche Linie sich durch Schnitt der Vestibularfläche mit einer Horizontalebene ergibt, welche Horizontalebene parallel zu einer durch den zervikalen Randpunkt der Vestibularfläche verlaufenden Ebene ist, und wobei die Horizontalebene mindestens 25% bezogen auf die oben definierte Länge L der Vestibularfläche von der durch den zervikalen Randpunkt verlaufenden parallelen Ebene beabstandet ist.

Für die vorliegende Erfindung soll darüber hinaus die Vestibularfläche und damit der mesial-distale Verlauf des Zahnäquators auf der Vestibularfläche, insbesondere für einen erfindungsgemässen künstlichen Schneidezahn, durch die im allgemeinen optisch ohne weiteres zu erkennenden Randleisten begrenzt sein.

Hinsichtlich weiterer Erläuterungen sowie Definitionen von in der vorliegenden Erfindung verwendeten Ausdrücken soll insbesondere auf die nachfolgenden Figuren bzw. Figurenbeschreibung hingewiesen werden. Darüber hinaus wurde, falls nicht gesondert erwähnt, die dem Fachmann bekannte Fachterminologie, wie sie insbesondere von G.-H. Schuhmacher et al in "Anatomie und Biochemie der Zähne", Gustav Fischer Verlag, Stuttgart, 1990, beschrieben ist, zugrunde gelegt.

In einer weiteren bevorzugten Ausführungsform der vorliegenden Erfindung ist der künstliche Frontzahn aus mindestens drei Schichten aufgebaut, die eine Zahnhalsschicht, eine Dentinschicht und eine Schmelzschicht umfassen. Typischerweise sind die mindestens drei Schichten derart angeordnet, dass die mindestens drei Schichten auf einer zervikal-inzisalen Länge K von mindestens ungefähr 2 mm ausgehend von der zervikalen Randbegrenzung der Vestibularfläche im wesentlichen parallel zur Vestibularfläche verlaufen. Bevorzugterweise sind die mindestens drei Schichten derart angeordnet, dass diese auf einer zervikal-inzisalen Länge K von mindestens ungefähr 3 mm, und besonders bevorzugt von mindestens ungefähr 4 mm, ausgehend von der zervikalen Randbegrenzung der Vestibularfläche im wesentlichen parallel zur Vestibularfläche verlaufen. Für die bevorzugten Ausführungsformen der vorliegenden Erfindung, welche einen überlangen Zahnhals aufweisen, und bei welchen daher der Zahnäquator mindestens ungefähr 50% bezogen auf die Länge L der Vestibularfläche vom zervikalen Rand der Vestibularfläche beabstandet ist, sind die mindestens drei Schichten derart angeordnet, dass diese auf einer zervikal-inzisalen Länge K von mindestens ungefähr 6 mm, bevorzugterweise von mindestens ungefähr 7 mm, und besonders bevorzugt von mindestens ungefähr 8 mm, ausgehend von zervikalen Randbegrenzung der Vestibularfläche im wesentlichen parallel zur Vestibularfläche verlaufen.

Zur Vermeidung von Missverständnissen soll an dieser Stelle auf die unterschiedliche Definition von "zervikalem Rand der Vestibularfläche", und "zervikaler Randbegrenzung der Vestibularfläche" hingewiesen werden. Während, wie oben erläutert, der "zervikale Rand der Vestibularfläche" für die vorliegende Erfindung auf einen Punkt bezogen definiert ist, stellt die "zervikale Randbegrenzung der Vestibularfläche" hierin die Linie des zervikalen Randes der Vestibularfläche dar.

Weitere vorteilhafte Weiterbildungen des erfindungsgemässen künstlichen Frontzahns weisen die Merkmale der Unteransprüche auf. So weist vorteilhafterweise die Dentinschicht über die zervikal-inzisale Länge K eine Dicke D zwischen ungefähr 0.05 mm und 0.35 mm, vorzugsweise zwischen 0.1 mm und 0.2 mm, und die Schmelzschicht über die zervikal-inzisale Länge K eine Dicke E zwischen ungefähr 0.05 mm und 0.35 mm, vorzugsweise zwischen ungefähr 0.1 mm und ungefähr 0.2 mm auf. In der vorliegenden Erfindung soll der Ausdruck "ungefähr" in Zusammenhang mit Längen- oder Prozentangaben oder dergleichen derart verstanden werden, dass die entsprechenden Längen- oder Prozentangaben oder dergleichen eine Variation von typisch ± 5% beinhalten.

In einer weiteren bevorzugten Ausführungsform der vorliegenden Erfindung weist der künstliche Frontzahn einen von der Dentinschicht gebildeten und mesial-distal verlaufenden inzisalen Saum auf. Bevorzugterweise weist der inzisale Saum eine inzisal-zervikale Breite M zwischen ungefähr 0.25 mm und ungefähr 2.5 mm, vorzugsweise zwischen ungefähr 0.5 mm und ungefähr 2.0 mm auf.

Im folgenden soll die Erfindung beispielhaft mit Hilfe der Figuren näher erläutert werden. Dabei zeigt:
- Fig. 1: einen schematischen Querschnitt entlang einer Saggitalen einer besonders bevorzugten Ausführungsform eines erfindungsgemässen künstlichen Frontzahns;
- Fig. 2: eine schematische Vorderansicht einer besonders bevorzugten Ausführungsform eines erfindungsgemässen künstlichen Frontzahns;
- Fig. 3: einen schematischen Querschnitt entlang einer Saggitalen einer weiteren besonders bevorzugten Ausführungsform eines erfindungsgemässen künstlichen Frontzahns;
- Fig. 4: eine schematische Vorderansicht einer weiteren besonders bevorzugten Ausführungsform eines erfindungsgemässen künstlichen Frontzahns.

In den Figuren sind in der Regel gleiche Teile mit gleichen Bezugszeichen gekennzeichnet.

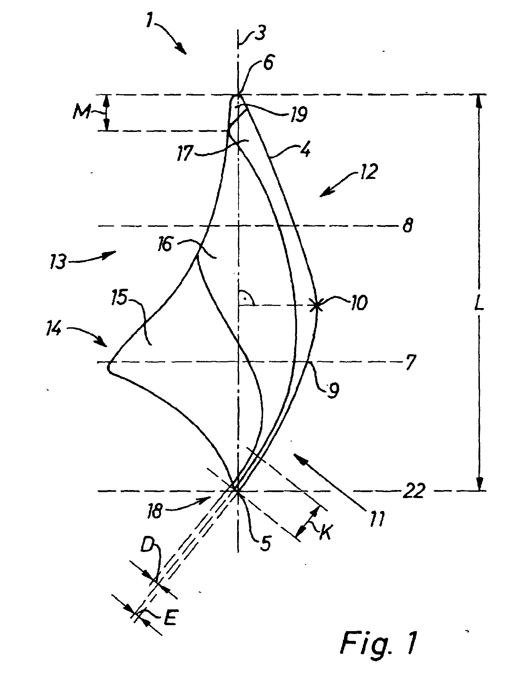

In Fig. 1 ist ein schematischer Querschnitt einer bevorzugten Ausführungsform eines erfindungsgemässen künstlichen Frontzahns 1 gezeigt, welcher Querschnitt entlang einer Saggitalen des künstlichen Frontzahns 1 verläuft, in welcher Saggitalen die Zahnachse 3 gemäss obiger Definition liegt. Die Vestibularfläche 4 des erfindungsgemässen Frontzahns 1 weist eine Länge L auf, wie sie oben bereits definiert wurde. So entspricht die Länge L, wie in Fig. 1 illustriert, dem Abstand zwischen dem zervikalen Randpunkt 5 und dem inzisalen Randpunkt 6 der Vestibularfläche 4 des künstlichen Frontzahns 1, welche Randpunkte 5 und 6 beide auf der Zahnachse 3 liegen. Die Horizontalebenen 7 und 8 teilen den künstlichen Frontzahn 1 in ein zervikales Drittel, ein mittleres Drittel und ein inzisales Drittel ein. Gemäss der in der vorliegenden Erfindung verwendeten Definition weist der auf der Horizontalebene 7 liegende Punkt 9 auf der Vestibularfläche 4 einen Abstand von 33,3% bezogen auf die Länge L der Vestibularfläche vom zervikalen Rand der Vestibularfläche auf, da die Horizontalebene 7 zu der parallel verlaufenden Ebene 22, in welcher der zervikale Randpunkt 5 der Vestibularfläche 4 liegt, 33,3% bezogen auf die Länge L der Vestibularfläche beabstandet ist. In der in Fig. 1 gezeigten besonders bevorzugten Ausführungsform des erfindungsgemässen künstlichen Frontzahns 1 ist daher der Zahnäquator 10 mindestens ungefähr 33 % bezogen auf die Länge L der Vestibularfläche vom zervikalen Rand der Vestibularfläche beabstandet. In der bevorzugten Ausführungsform von Fig. 1 ist der Zahnäquator 10 um mindestens 40 % bezogen auf die Länge L der Vestibularfläche vom zervikalen Rand der Vestibularfläche beabstandet. Der Zahnäquator 10 teilt dabei die Vestibularfläche bzw. Fazialfläche 4 des künstlichen Frontzahns 1 in zwei annähernd gleiche Hälften mit jeweils sehr schwacher Krümmung, d.h. in eine zervikale Facette 11 und eine inzisale Facette 12.

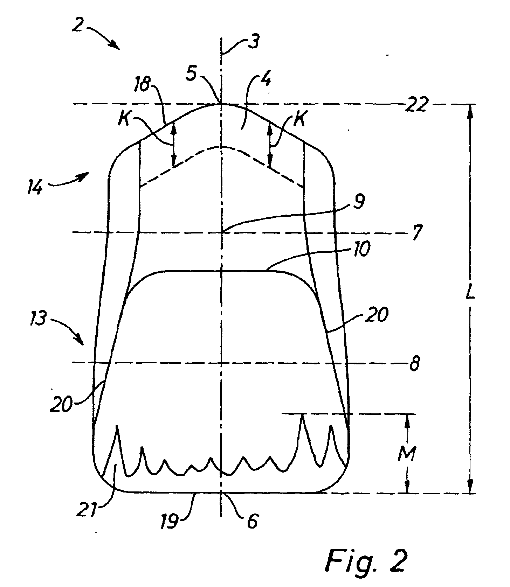

Gemäss der vorliegenden Erfindung gehen der Zahnkörper 13 und der Zahnhals 14 des künstlichen Frontzahns 1 absatzlos ineinander über. Die in Fig. 1 gezeigte bevorzugte Ausführungsform des künstlichen Frontzahns 1 ist aus drei Schichten aufgebaut, nämlich einer Zahnhalsschicht 15, einer Dentinschicht 16 und einer Schmelzschicht 17. Dabei ist die Materialwahl der einzelnen Schichten im Bereich des fachmännischen Könnens und bedarf hier keiner weiteren Erläuterung. Hinsichtlich der Anordnung der einzelnen Schichten weist allerdings der künstliche Frontzahn 1 gemäss der Erfindung bevorzugte Merkmale auf. So sind die drei Schichten 15, 16 und 17 derart angeordnet, dass diese auf der zervikal-inzisalen Länge K von mindestens ungefähr 2 mm ausgehend von der zervikalen Randbegrenzung 18 der Vestibularfläche im wesentlichen parallel zur Vestibularfläche 4 verlaufen. Es soll in diesem Zusammenhang darauf hingewiesen werden, dass die drei Schichten 15, 16 und 17 im gesamten Bereich der Vestibularfläche 4 ausgehend von der zervikalen Randbegrenzung 18 der Vestibularfläche auf der zervikal-inzisalen Länge K parallel angeordnet sind, wie dies insbesondere in Fig. 2 angedeutet ist. In Fig. 2 wird dabei dieser Bereich durch die zervikale Randbegrenzung 18 der Vestibularfläche, die Randleisten 20 und die zur Randbegrenzung 18 parallel verlaufende, gestrichelte Linie auf der Vestibularfläche 4 im Abstand der Länge K eingegrenzt.

In diesem Zusammenhang ist zu erwähnen, dass die Länge K als auch die nachfolgend erwähnte Dicke D bzw. Dicke E der einzelnen Schichten, sowie die inzisal-zervikale Breite M des inzisalen Saums, nicht notwendigerweise in Fig. 1 massstabsgerecht gezeichnet sind. Es wurde vielmehr bei diesen Längen bzw. Dicken und Breite auf den illustrativen Charakter Wert gelegt. Analoges gilt auch für die nachfolgend zu diskutierenden Figuren 2-4.

Bevorzugterweise sind die drei Schichten 15, 16, 17 derart angeordnet, dass diese auf der Länge K von mindestens ungefähr 3 mm, besonders bevorzugterweise von mindestens ungefähr 4 mm, ausgehend von der zervikalen Randbegrenzung 18 der Vestibularfläche im wesentlichen parallel zur Vestibularfläche 4 verlaufen. Unter "im wesentlichen parallel" soll hierin verstanden werden, dass Abweichungen von ungefähr ± 15°, vorzugsweise von ungefähr ± 10°, und besonders bevorzugterweise von ungefähr ± 5°, von der Parallelität der Schichten 15, 16, 17 eingeschlossen sein soll.

Die Dentinschicht 16 weist über die zervikal-inzisale Länge K und damit für den gesamten, oben erläuterten Bereich eine Dicke D von zwischen ungefähr 0.05 mm und 0.35 mm auf, vorzugsweise zwischen 0.1 mm und 0.2 mm. In derselben Grössenordnung liegt die Dicke E der Schmelzschicht 17 für den erwähnten gesamten Bereich, für den die Schichten 15, 16 und 17 im wesentlichen parallel zur Vestibularfläche 4 verlaufen.

Eine derartige Anordnung der Zahnhalssicht 15, Dentinschicht 16 und der Schmelzschicht 17 im erwähnten Bereich und über die zervikal-inzisale Länge K erweist sich als überaus vorteilhaft, da durch zervikales Beschleifen im Bereich des Zahnhalses, und insbesondere im erwähnten Bereich über die Länge K, eine gewünschte, der individuellen Situation angepasste Zahnhalscharachteristik erreicht werden kann.

Desweiteren erlaubt das oberflächliche Entfernen der Schmelzschicht 17 bzw. Teile davon und gegebenenfalls der Dentinschicht 16 bzw. Teile davon im genannten zervikalen Bereich der Vestibularfläche 4 über die zervikal-inzisale Länge K, dass die höherchromatische Farbschicht der Dentinschicht 16 und Zahnhalsschicht 15 besser zutage treten kann, und somit zu einem natürlichen Erscheinungsbild gealterter Zähne mit exponiertem Wurzeldentin führt.

Die bevorzugte Ausführungsform des erfindungsgemässen künstlichen Frontzahns 1 weist darüber hinaus einen von der Dentinschicht 16 gebildeten und mesial-distal verlaufenden inzisalen Saum 19 auf. Dieser inzisale Saum 19 weist eine inzisal-zervikale Breite M von vorzugsweise zwischen ungefähr 0.5 mm und ungefähr 2.0 mm auf.

Fig. 2 zeigt eine schematische Vorderansicht einer besonders bevorzugten Ausführungsform der vorliegenden Erfindung. So weist der künstliche Frontzahn 2 einen Zahnkörper 13 und einen Zahnhals 14 auf, welche absatzlos ineinander übergehen. Die Vestibularfläche 4 des künstlichen Frontzahns 2 wird durch die Randleisten 20 begrenzt. In der besonders bevorzugten Ausführungsform der Fig. 2 ist der mesial-distal verlaufende Zahnäquator 10 mindestens ungefähr 33 % bzw. mindestens ungefähr 40 % bezogen auf die Länge L der Vestibularfläche 4 vom zervikalen Rand der Vestibularfläche gemäss obiger Definition beabstandet.

Das Fehlen einer vorgefertigten, abgesetzten Zahnhalsstruktur charakterisiert den erfindungsgemässen künstlichen Frontzahn als volle klinische Zahnkronenform. Dies erweist sich insbesondere bei der Anpassung an die individuelle Situation und/oder die Gestaltung der Zahnfleischanteile als besonders vorteilhaft. So kann je nach Zahnform, gewünschter Gestaltung und/oder erforderlicher oder gewünschter Zahngrösse der erfindungsgemässe künstliche Frontzahn in seiner Länge um bis zu 4.5 mm gekürzt werden, im Falle der bevorzugten Ausführungsformen mit überlangen Zahnhälsen gar um bis zu 9 mm. Insbesondere die Lage des Zahnäquators gemäss der Erfindung ermöglicht ein Kürzen der Zähne von Basal, ohne dass hierdurch die zahnspezifische Formcharakteristik verloren geht.

In Fig. 2 weist der künstliche Frontzahn 2 einen mesial-distal verlaufenden inzisalen Saum 19 auf, welcher eine inzisal-zervikale Breite M zwischen ungefähr 0.25 mm und ungefähr 2.5 mm besitzt. Der inzisale Saum 19 gemäss der besonders bevorzugten Ausführungsform dieser Erfindung weist einen unregelmässigen Verlauf auf. Es versteht sich allerdings, dass der inzisale Saum 19 in seinem gesamten mesial-distalen Verlauf einen regelmässigen Verlauf, d.h. eine konstante inzisal-zervikale Breite M aufweisen kann.

Insbesondere kann ein derartiger inzisaler Saum 19 gemäss der vorliegenden Erfindung sogenannte Mamelons 21 aufweisen. Diese natürliche Ausformung einer schmelzüberzogenen fingerförmig-gezackten Dentinstruktur bewirkt eine natürliche Vitalität im inzisalen Bereich und einen übergängigen Verlauf zwischen Schmelz- und Dentinbereich mit sanft verlaufender Transluzenzzunahme nach inzisal. Darüber hinaus imitiert der Schichtaufbau mit feinen Dentinsstrukturen im inzisalen Bereich gemäss der vorliegenden Erfindung die natürliche Zahnmorphologie. So lässt sich durch Kürzen der Schneidekante somit in einfacher Weise die naturtypische Abrasionscharakteristik mit inzisal freiliegender Dentinschicht sichtbar machen.

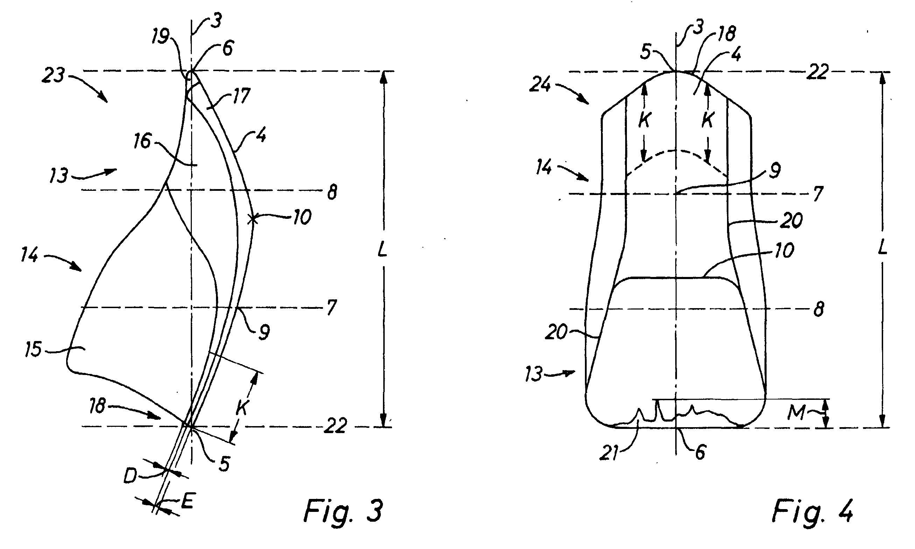

Die Fig. 3 und Fig. 4 zeigen einen schematischen Querschnitt entlang einer Saggitalen sowie eine schematische Vorderansicht von besonders bevorzugten Ausführungsformen der vorliegenden Erfindung. So weisen die künstlichen Frontzähne 23 und 24 insbesondere einen überlangen Zahnhals 14 auf, welcher absatzlos in den Zahnkörper 13 übergeht. Ein derartiger künstlicher Frontzahn mit einem überlangen Zahnhals kann auch als künstlicher Frontzahn mit einem sogenannten "Wurzelfortsatz" bezeichnet werden, da derartige bevorzugte Ausführungsformen des erfindungsgemässen künstlichen Frontzahns insbesondere bei der Herstellung von Implantaten vorteilhafterweise Verwendung finden, und hierbei, wie bereits erläutert, ein erheblicher Knochenverlust beim Patienten kompensiert werden muss, was durch einen derartigen überlangen Zahnhals bzw. einen derartigen Wurzelfortsatz erreicht wird. Insbesondere die Lage des Zahnäquators 10, der typisch für diese bevorzugte Ausführungsformen mindestens 50%, bevorzugt mindestens 60%, bezogen auf die Länge L der Vestibularfläche vom zervikalen rand der Vestibularfläche beabstandet ist, erweist dabei für eine in einfacher Weise ausführbare Anpassbarkeit an die individuelle klinische Situation und zur Erzielung eines anatomisch wie ästhetisch zufriedenstellenden Erscheinungsbildes als vorteilhaft. So kann ein solcher überlanger Zahnhals 14 um bis zu 5 mm verlängert sein.

Obwohl hier bevorzugte Ausführungsformen der Erfindung beschrieben wurden, ist es für Fachleute auf dem Gebiet der Erfindung offensichtlich, dass Verändern und Modifikationen der beschriebenen Ausführungsbeispiele durchgeführt werden können, ohne sich vom Wesen und Zweck der Erfindung zu entfernen. Insbesondere bedarf es keinerlei erfinderischer Tätigkeit, geeignete Materialien respektive Dimensionen der erfindungsgemässen künstlichen Frontzähne in geeigneter Weise und gemäss der Erfindung auszuwählen. Darüber hinaus versteht es sich, dass der Verlauf der Randleisten im Bereich des Zahnhalses, insbesondere für die bevorzugte, einen überlangen Zahnhals aufweisende Ausführungsform, variert und der individuellen klinischen Situation angepasst werden kann.

### Bezugszeichenliste

- 1,2,23,24: künstlicher Frontzahn
- 3: Zahnachse
- 4: Vestibularfläche
- 5: zervikaler Randpunkt der Vestibularfläche
- 6: inzisaler Randpunkt der Vestibularfläche
- 7,8: Horizontalebenen durch den künstlichen Frontzahn
- 9: Punkt auf Vestibularfläche, welcher 33 % bezogen auf die Länge L der Vestibularfläche vom zervikalen Rand der Vestibularfläche beabstandet ist
- 10: Zahnäquator
- 11: zervikale Facette
- 12: inzisale Facette
- 13: Zahnkörper
- 14: Zahnhals
- 15: Zahnhalsschicht
- 16: Dentinschicht
- 17: Schmelzschicht
- 18: zervikale Randbegrenzung der Vestibularfläche
- 19: inzisaler Saum
- 20: Randleisten
- 21: Mamelons
- 22: durch den zervikalen Randpunkt der Vestibularfläche horizontal verlaufende Ebene

## Patentansprüche

1. Künstlicher Frontzahn zum Aufbau von dentalen Total- oder Teilprothesen, von zahnärztlichen Provisorien oder implantatgetragenem Zahnersatz, welcher künstliche Frontzahn einen Zahnkörper und einen Zahnhals aufweist, die absatzlos ineinander übergehen, und welcher künstliche Frontzahn eine Vestibularfläche mit einer Länge L und einem mesial-distal verlaufenden Zahnäquator aufweist, dadurch gekennzeichnet, dass der Zahnäquator mindestens ungefähr 25% bezogen auf die Länge L der Vestibularfläche vom zervikalen Rand der Vestibularfläche beabstandet ist.

2. Künstlicher Frontzahn nach Anspruch 1, dadurch gekennzeichnet, dass der Zahnäquator mindestens ungefähr 33%, vorzugsweise mindestens ungefähr 40%, bezogen auf die Länge L der Vestibularfläche vom zervikalen Rand der Vestibularfläche beabstandet ist.

3. Künstlicher Frontzahn nach Anspruch 1 oder 2, dadurch gekennzeichnet, dass der Zahnäquator mindestens ungefähr 50%, vorzugsweise mindestens ungefähr 60%, bezogen auf die Länge L der Vestibularfläche vom zervikalen Rand der Vestibularfläche beabstandet ist.

4. Künstlicher Frontzahn nach einem der Ansprüche 1 bis 3, dadurch gekennzeichnet, dass der künstliche Frontzahn aus mindestens drei Schichten umfassend einer Zahnhalsschicht, einer Dentinschicht, und einer Schmelzschicht aufgebaut ist.

5. Künstlicher Frontzahn nach Anspruch 4, dadurch gekennzeichnet, dass die mindestens drei Schichten derart angeordnet sind, dass diese auf einer zervikal-inzisalen Länge K von mindestens ungefähr 2 mm ausgehend von der zervikalen Randbegrenzung der Vestibularfläche im wesentlichen parallel zur Vestibularfläche verlaufen.

6. Künstlicher Frontzahn nach Anspruch 4, dadurch gekennzeichnet, dass die mindestens drei Schichten derart angeordnet sind, dass diese auf einer zervikal-inzisalen Länge K von mindestens ungefähr 3 mm, vorzugsweise von mindestens ungefähr 4 mm, ausgehend von der zervikalen Randbegrenzung der Vestibularfläche im wesentlichen parallel zur Vestibularfläche verlaufen.

7. Künstlicher Frontzahn nach einem der Ansprüche 4 bis 6, dadurch gekennzeichnet, dass die Dentinschicht über die zervikal-inzisale Länge K eine Dicke D zwischen ungefähr 0.05 mm und 0.35 mm, vorzugsweise zwischen 0.1 mm und 0.2 mm, und die Schmelzschicht über die zervikal-inzisale Länge K eine Dicke E zwischen ungefähr 0.05 mm und 0.35 mm, vorzugsweise zwischen ungefähr 0.1 mm und ungefähr 0.2 mm, aufweist.

8. Künstlicher Frontzahn nach einem der Ansprüche 4 bis 7, dadurch gekennzeichnet, dass der künstliche Frontzahn einen von der Dentinschicht gebildeten und mesial-distal verlaufenden inzisalen Saum aufweist.

9. Künstlicher Frontzahn nach Anspruch 8, dadurch gekennzeichnet, dass der inzisale Saum eine inzisal-zervikale Breite M zwischen ungefähr 0.25 mm und ungefähr 2.5 mm, vorzugsweise zwischen ungefähr 0.5 mm und ungefähr 2.0 mm aufweist.

10. Dentale Prothese, insbesondere dentale Voll- oder Teilprothese, zahnärztliches Provisorium oder implantatgetragener Zahnersatz, dadurch gekennzeichnet, dass diese mindestens einen künstlichen Frontzahn gemäss Anspruch 1 aufweisen.
